(19) **Europäisches Patentamt**

**European Patent Office**

**Office européen des brevets**

(11) Veröffentlichungsnummer : **0 062 774**
**B1**

(12) **EUROPÄISCHE PATENTSCHRIFT**

(45) Veröffentlichungstag der Patentschrift :
13.06.84

(51) Int. Cl.³ : **F 16 D 65/12**

(21) Anmeldenummer : **82102140.9**

(22) Anmeldetag : **17.03.82**

(54) **Radbremsscheibe für Schienenfahrzeuge.**

(30) Priorität : **14.04.81 DE 3114995**

(43) Veröffentlichungstag der Anmeldung :
**20.10.82 Patentblatt 82/42**

(45) Bekanntmachung des Hinweises auf die Patenterteilung : **13.06.84 Patentblatt 84/24**

(84) Benannte Vertragsstaaten :
**DE FR GB IT**

(56) Entgegenhaltungen :
**DE-A- 1 680 836**
**DE-B- 1 141 309**
**DE-B- 1 194 439**
**DE-B- 1 214 265**
**FR-A- 1 562 304**

(73) Patentinhaber : **Knorr-Bremse GmbH**
**Moosacher Strasse 80**
**D-8000 München 40 (DE)**

(72) Erfinder : **Schörwerth, Mathias**
**Frauenschuhweg 10a**
**D-8192 Geretsried 1 (DE)**
Erfinder : **Wirth, Xaver, Dr.**
**Birkhuhnweg 18**
**D-8045 Ismaning (DE)**

## Beschreibung

Die Erfindung bezieht sich auf eine Radbremsscheibe für Schienenfahrzeuge, mit beidseitig an einer Radscheibe mittels axialgerichteter Schrauben radial verschieblich befestigten Reibringen, wobei die Radscheibe von wenigstens drei in gleichmäßigen Winkelabständen zueinander angeordneten Bohrungen durchsetzt ist, in welche Buchsen eingreifen, die an ihren aus der Radscheibe axial vorstehenden Enden Kulissensteine mit zur Radscheibe im wesentlichen radialgerichteten, zur Radscheibenachse und zueinander parallelen Seitenflächen tragen, wobei die Kulissensteine in Führungsnuten der Reibringe eingreifen, die an den Seitenflächen anliegende und zu diesen parallele Führungsflächen aufweisen, und wobei die beiden Reibringe mittels der die Buchsen und deren Kulissensteine mit Spiel durchgreifenden Schrauben unter axialer Verspannung an die Radscheibe miteinander verschraubt sind.

Eine diesen Merkmalen entsprechende Radbremsscheibe ist aus der DE-AS 1 141 309 bekannt. Bei dieser bekannten Radbremsscheibe sind die Buchsen in die Bohrungen der Radscheibe eingepreßt und die Kulissensteine sind drehbar auf den aus der Radscheibe vorstehenden Enden der Buchsen gelagert. Die vorzugsweise als längsgeschlitzte Spannhülsen ausgeführten Buchsen sollen hierbei durch ihre Elastizität Fertigungstoleranzen hinsichtlich der Bohrungen, der Kulissensteine und der Führungsnuten ausgleichen, wie es insbesondere bei der Anordnung von mehr als drei über den Umfang verteilten Kulissensteinen erforderlich sein kann. Die Elastizität der Buchsen bewirkt bei toleranzbedingter, in Umfangsrichtung etwas versetzter Lage der Kulissensteine Verspannungen zwischen diesen und den Führungsflächen der Führungsnuten, welche zu einem beschleunigten Verschleiß führen können und welche sich mit den zu übertragenden Bremskräften zu hohen Gesamtkräften überlagern können. Weiterhin ist durch die Elastizität der Buchsen keine starre, sondern nur eine elastische Übertragung der Bremskräfte von den Reibringen auf die Radscheibe möglich.

Der Erfindung liegt die Aufgabe zugrunde, eine Radbremsscheibe der eingangs genannten Art zu schaffen, bei welcher fertigungsbedingte Toleranzabweichungen zu keinen Verspannungen an den Kulissensteinen bzw. den Führungsnuten führt, bei welcher die Bremskräfte ohne Belastung eines elastischen Bauteiles von den Reibringen auf die Radscheibe übertragen werden und welche zudem eine gute Zentrierung der Reibringe sowohl bei der Fertigung wie während des Betriebes ermöglicht.

Diese Aufgabe wird nach der Erfindung dadurch gelöst, daß die Buchsen mit einem wenigstens der mittleren Summe der Fertigungstoleranzen der Bohrungen, Kulissensteine und Führungsnuten entsprechenden Spiel in den Bohrungen geführt sind, daß die Kulissensteine eine die axiale Tiefe der Führungsnuten übersteigende, axiale Stärke aufweisen und zumindest im Teilkreisbereich der Schrauben die einzige, axiale Abstützung zwischen Radscheibe und den Reibringen darstellen, und daß die Kulissensteine bei Radialverschiebungen gegenüber der Radscheibe einen größeren Reibwert als gegenüber den Reibringen aufweisen.

Dabei ist es zweckmäßig, wenn die der Radscheibe zugewandten Stirnflächen der Kulissensteine eine größere Rauhigkeit als die den Reibringen zugewandten Stirnflächen aufweisen und wenn des weiteren die Kulissensteine aus einem härteren Material als die Radscheibe bestehen. Durch diese Maßnahmen wird der erforderliche, größere Reibwert zwischen den Kulissensteinen und der Radscheibe erzielt, wobei durch entsprechende Materialhärten erreichbar ist, daß sich die Rauhigkeit der Kulissensteine in die Radscheibe einpreßt und somit ein besonders hoher Reibwert erzielt wird.

Nach einem weiteren Merkmal der Erfindung können die Buchsen mit den Kulissensteinen einstückig gefertigt werden, wobei die der Radscheibe zugewandten Stirnflächen der Kulissensteine Drehriefen aufweisen, die andersseitigen Stirnflächen glattgeschliffen sein können, um die gewünschte Rauhigkeitsverteilung an den Kulissensteinen sicherzustellen.

Schließlich ist es nach der Erfindung zweckmäßig, das Spiel der Buchsen in den Bohrungen etwa entsprechend der Summe der Fertigungstoleranzen der Bohrungen, Kulissensteine und Führungsnuten zu wählen, so daß es jedenfalls ausreicht, die Fertigungstoleranzen aufzunehmen, jedoch auch nicht unnötig groß ist.

In der Zeichnung ist eine nach der Erfindung ausgebildete Radbremsscheibe beispielsweise dargestellt, und zwar zeigt

Figur 1 einen Axialschnitt durch die Radbremsscheibe und

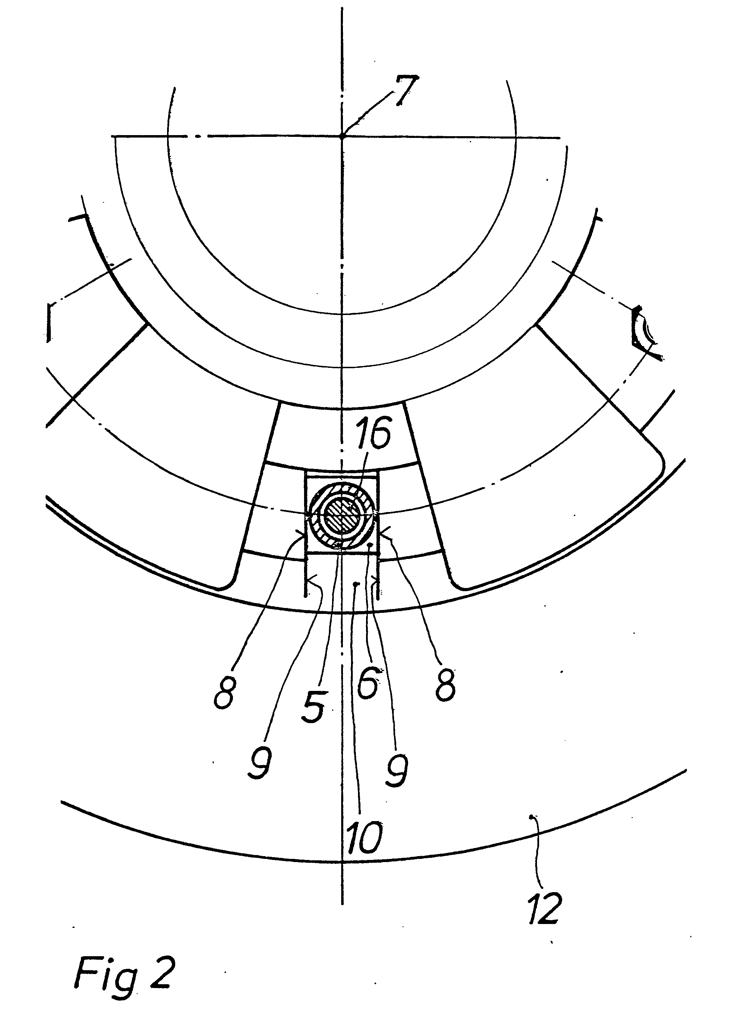

Figur 2 eine Teilansicht entsprechend Linie II-II in Fig. 1, in verkleinertem Maßstab.

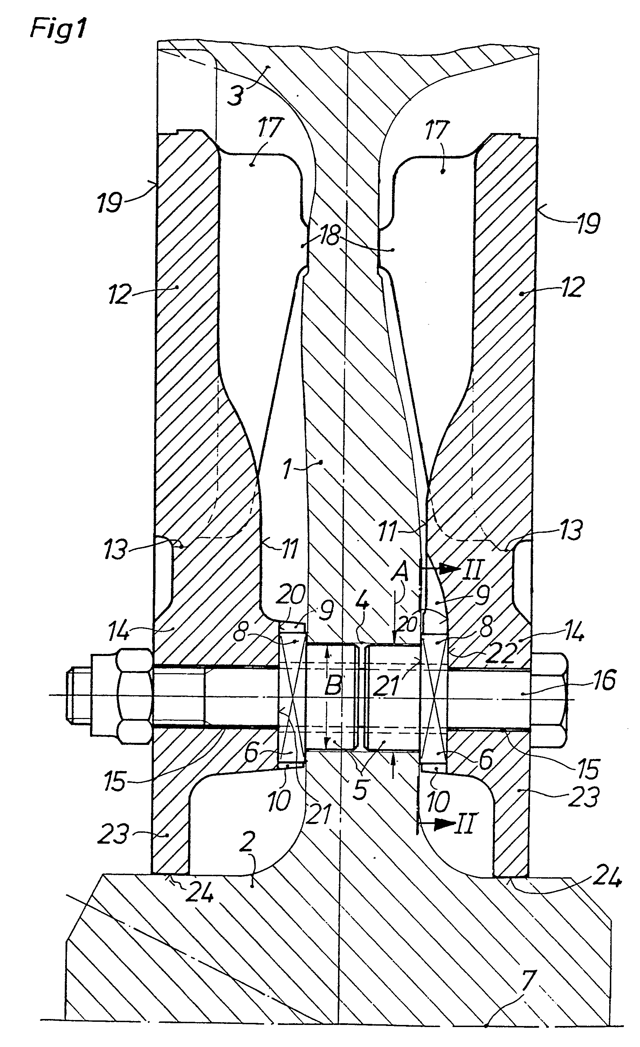

Die Fig. 1 zeigt ein Schienenfahrzeugrad mit einer Radscheibe 1, welche einen Nabenabschnitt 2 mit einem Radreifen 3 verbindet. Nahe des Nabenabschnittes 2 ist die Radscheibe 1 mit wenigstens drei in gleichmäßigen Winkelabständen zueinander angeordneten, sie durchsetzenden Bohrungen 4 versehen, deren jede einen Durchmesser A aufweist. In die Bohrungen 4 greifen von beiden Seiten mit geringem Abstand voreinander endende Buchsen 5 ein, welche einen Durchmesser B aufweisen. Die seitlich der Radscheibe 1 vorstehenden Enden der Buchsen 5 sind zu Gleitsteinen 6 ausgebildet, deren jeder zur Radscheibe 1 im wesentlichen radial gerichtete, zur Radscheibenachse 7 und zueinander parallele Seitenflächen 8 aufweist. Die beiderseitigen Seitenflächen 8 jedes Kulissensteines 6 liegen an den Führungsflächen 9 bildenden Seitenwandungen von Führungsnuten 10 an, welche parallel zu den Seitenflächen 8 verlaufen. Die Führungsnuten 10 befinden sich an den der Radscheibe 1 zugewandten Stirnflächen 11 zweier beiderseits der Radscheibe 1 angeordneter Reibringe 12. Die Reibringe 12 enden in Umfangsrichtung gesehen zwischen den Bohrungen 4 radial mit Abstand außerhalb dieser Bohrungen an der mit dem Bezugszeichen 13 versehenen Stelle ; nur im Bereich der Bohrungen 4 sind die Reibringe 12 mit radial nach innen ragenden, die Führungsnuten 10 aufweisenden Fortsätzen 14 versehen. Die Fortsätze 14 sind mit Bohrungen 15 versehen, welche zu den Bohrungen 4 fluchten. Durch die Bohrungen 15 und die Bohrungen der Buchsen 5 bzw. die Bohrungen 4 greifen mit radialem Spiel Schrauben 16, welche die Reibringe 12 in Anpreßrichtung an die Radscheibe 1 gegenseitig verspannen. Im Ringbereich außerhalb der Stelle 13 tragen die Reibringe 12 seitens der inneren Stirnflächen 11 übliche, radiale Ventilationsrippen 17, die nahe des Radreifens 3 mit einem Abstützfortsatz 18 versehen sind, mit welchem sie sich axial an der Radscheibe 1 abstützen können.

An die der Radscheibe 1 abgewandten äußeren Stirnflächen 19 der Reibringe 12 sind nicht dargestellte Bremsbacken einer Scheibenbremse anpreßbar.

Die Kulissensteine 6 weisen in Richtung der Radscheibenachse 7 gesehen eine axiale Stärke auf, welche größer ist als die Tiefe der Führungsnuten 10, so daß sie bei Anlage an der Grundfläche 20 der Führungsnuten 10 zumindest im Teilkreisbereich der Schrauben 16 die innere Stirnfläche 11 der Reibringe 12 bzw. deren Fortsätze 14 in Richtung zur Radscheibe 1 überragen. Die Gleitsteine 6 sind somit zwischen die Reibringe 12 und die Radscheibe 1 eingespannt und übertragen die durch die Schrauben 16 bewirkte, gegenseitige Verspannung der beidseitigen Reibringe 12 von diesen auf die Radscheibe 1.

Die einstückig mit den Buchsen 5 gefertigten Kulissensteine 6 bestehen aus einem härteren Material als die Radscheibe 1 und weisen auf ihrer der Radscheibe 1 zugewandten Stirnfläche 21 Drehriefen auf, während sie andersseitig, auf ihren Stirnflächen 22, glattgeschliffen sind. Seitens der Radscheibe 1 besitzen die Kulissensteine 6 also eine größere Rauhigkeit als seitens der Reibringe 12, vermögen sich infolge ihrer größeren Härte im Rahmen ihrer Rauhigkeit in die Oberfläche der Radscheibe 1 unter der Belastung durch die Schrauben 6 einzupressen und weisen somit gegenüber der Radscheibe 1 einen wesentlich größeren Reibwert als gegenüger den Reibringen 12 auf.

Die Durchmesser A und B sind derart bemessen, daß die Buchsen 5 in den Bohrungen 4 ein Spiel besitzen, welches wenigstens der mittleren Summe der Fertigungstoleranzen der Bohrungen 4, der Kulissensteine 6 und der Führungsnuten 10, vorzugsweise jedoch der Summe dieser Fertigungstoleranzen entspricht.

Die Fortsätze 14 sind mit radial nach innen ragenden Verlängerungen 23 versehen, welche mit einer Zylinderfläche 24 enden. Bei kalter, im Ruhezustand befindlicher Radbremsscheibe liegen die Zylinderflächen 24 am Außenumfang des Nabenanschnittes 2 an und gewährleisten eine Zentrierung der Reibringe 12, insbesondere während der Montage der Radbremsscheibe.

Bei der Montage der Radbremsscheibe werden nach Einlegen der Buchsen 5 mit den Kulissensteinen 6 in die Bohrungen 4 die Reibringe 12 beidseitig an die Radscheibe 1 angelegt und mittels der Schrauben 16 lose, noch ohne gegenseitige Verspannung, verbunden. Die mit ihren Zylinderflächen 24 am Außenumfang des Nabenabschnittes 2 anliegenden Verlängerungen 23 ergeben hierbei eine gute Zentrierung der Reibringe 12 zur Radscheibe 1, wobei durch Fertigungstoleranzen bedingte Versetzungen und Ungenauigkeiten durch entsprechende Verlagerung der Buchsen 5 in den Bohrungen 4 im Rahmen ihres Spieles aufgenommen werden. Da das Spiel entsprechend der Summe der Toleranzmaße bemessen ist, reicht es jedenfalls zur Aufnahme der erwähnten Toleranzabweichungen und Ungenauigkeiten aus. Sodann werden die Schrauben 16 vorzugsweise über Kreuz festgezogen, wobei die Kulissensteine 6 axial belastet werden und sich mit ihrer Rauhigkeit an der Stirnfläche 21 in die Radscheibe 1 eindrücken.

Beim Betrieb der Radbremsscheibe dehnen sich die Reibringe 12 bei Erwärmung radial aus, wobei sie mit ihren Führungsnuten 10 an den Kulissensteinen 6 entlanggleiten. Die Kulissensteine 6 verharren dabei infolge ihrer großen Reibung zur Radscheibe 1 in ihrer relativen Lage zu dieser, die Wärmedehnungen führen also infolge der Reibwertabstimmung an den Kulissensteinen 6 ausschließlich zu Verschiebungen zwischen den Kulissensteinen 6 und den Reibringen 12. Die Schrauben 16 folgen den Wärmedehnungen der Reibringe 12, gelangen jedoch infolge des relativ großen Spieles zur Innenwandung der Buchsen 5 mit ihrem Schaft nicht zur Anlage an den Buchsen 5. Das Zusammenwirken der Gleitsteine 6 mit den Führungsnuten 10 gewährleistet während aller Dehnungszustände der Reibringe 12 deren Zentrierung zur Radscheibe 1.

Die Anpreßkraft der nicht dargestellten Bremsbacken an die Reibringe 12 wird von diesen großenteils über die Abstützfortsätze 18 auf die Radscheibe 1 übertragen, belastet die Fortsätze 14 also nicht wesentlich mit Biegemomenten.

In Abänderung zum vorstehend beschriebenen Ausführungsbeispiel können die Verlängerungen 23 entfallen, es ist dann lediglich dafür zu sorgen, daß bei der Montage der Radbremsscheibe während noch losen Schrauben 16 die Reibringe 12 gut zentriert werden und in dieser zentrier-Lage die Schrauben 16 festgezogen werden. Beim Zentriervorgang gelangen die Kulissensteine 6 zwängungsfrei in ihre die Fertigungstoleranzen ausgleichenden Lagen und werden sodann in diesen Lagen beim Festspannen der Schrauben 16 fixiert.

Die nach der Erfindung ausgebildete Radbremsscheibe kann mit beliebig vielen, auf einem oder mehreren Teilkreisen angeordneten Kulissensteinen 6 mit Führungsnuten 10 versehen werden, wobei im Ruhezustand keinerlei Verspannung auftritt und während Bremsungen die Bremskräfte über alle Kulissensteine 6 gleichmäßig verteilt von den Reibringen 12 auf die Radscheibe 1 übertragen werden.

Bezugszeichenliste

1 Radscheibe
2 Nabenabschnitt
3 Radreifen
4 Bohrungen
A Durchmesser
5 Buchse
B Durchmesser
6 Kulissenstein
7 Radscheibenachse
8 Seitenfläche
9 Führungsfläche
10 Führungsnut
11 Stirnfläche
12 Reibring
13 Stelle
14 Fortsatz
15 Bohrung
16 Schrauben
17 Ventilationsringe
18 Abstützfortsatz
19 Stirnfläche
20 Grundfläche
21 Stirnfläche
22 Stirnfläche
23 Verlängerung
24 Zylinderfläche

**Ansprüche**

1. Radbremsscheibe für Schienenfahrzeuge, mit beidseitig an einer Radscheibe (1) mittels axialgerichteter Schrauben (16) radial verschieblich befestigten Reibringen (12), wobei die Radscheibe (1) von wenigstens drei in gleichmäßigen Winkelabständen zueinander angeordneten Bohrungen (4) durchsetzt ist, in welche Buchsen (5) eingreifen, die an ihren aus der Radscheibe (1) axial vorstehenden Enden Kulissensteine (6) mit zur Radscheibe (1) im wesentlichen radialgerichteten, zur Radscheibenachse (7) und zueinander parallelen Seitenflächen (8) tragen, wobei die Kulissensteine (6) in Führungsnuten (10) der Reibringe (12) eingreifen, die an den Seitenflächen (8) anliegende und zu diesen parallele Führungsflächen (9) aufweisen, und wobei die beiden Reibringe (12) mittels der die Buchsen (5) und deren Kulissensteine (6) mit Spiel durchgreifenden Schrauben (16) unter axialer Anpressung an die Radscheibe (1) miteinander verschraubt sind, dadurch gekennzeichnet, daß die Buchsen (5) mit einem wenigstens der mittleren Summe der Fertigungstoleranzen der Bohrungen (4), Kulissensteine (6) und Führungsnuten (10) entsprechenden Spiel in den Bohrungen (4) geführt sind, daß die Kulissensteine (6) eine die axiale Tiefe der Führungsnuten (10) übersteigende, axiale Stärke aufweisen und zumindest im Teilkreisbereich der Schrauben (16) die einzige axiale Abstützung zwischen Radscheibe (1) und den Reibringen (12) darstellen, und daß die Kulissensteine (6) bei Radialverschiebungen gegenüber der Radscheibe (1) einen größeren Reibwert als gegenüber den Reibringen (12) aufweisen.

2. Radbremsscheibe nach Anspruch 1, dadurch gekennzeichnet, daß die der Radscheibe (1) zugewandten Stirnflächen (21) der Kulissensteine (6) eine größere Rauhigkeit als die den Reibringen (12) zugewandten Stirnflächen (22) aufweisen.

3. Radbremsscheibe nach Anspruch 2, dadurch gekennzeichnet, daß die Kulissensteine (6) aus einem härteren Material als die Radscheibe (1) bestehen.

4. Radbremsscheibe nach Anspruch 1, 2 oder 3, dadurch gekennzeichnet, daß die Buchsen (5) mit den Kulissensteinen (6) einstückig gefertigt sind.

5. Radbremsscheibe nach Anspruch 2 bis 4, dadurch gekennzeichnet, daß die der Radscheibe (1) zugewandten Stirnflächen (21) der Kulissensteine (6) Drehriefen aufweisen, die andersseitigen Stirnflächen (22) glattgeschliffen sind.

6. Radbremsscheibe nach einem oder mehreren der vorstehenden Ansprüche, dadurch gekennzeichnet, daß das Spiel der Buchsen (5) in den Bohrungen (4) etwa der Summe der Fertigungstoleranzen der Bohrungen (4), Kulissensteine (6) und Führungsnuten (10) entspricht.

**Claims**

1. Wheel brake disc for rolling stock, having friction rings (12) secured to both sides of a wheel disc (1) by means of axially extending screws (16) in such a manner as to be radially displaceable, the wheel disc (1) being penetrated by at least three bores (4) arranged at even angular distances from one another, into which sleeves (5) fit, which have, at their ends projecting axially out of the wheel disc (4), slide blocks (6) with sides (8) aligned substantially radially relative to the wheel disc (1), and parallel to the axis (7) of the wheel disc and to one another, the sliding blocks (6) fitting into guide grooves (10) of the friction rings (12), which have guide surfaces (9) abutting the sides (8) and lying parallel thereto, and the two friction rings (12) being screwed together by means of the screws (16) penetrating the sleeves (5) and their sliding blocks (6) with room for play, at the same time pressing axially against the wheel disc (1), characterised in that the sleeves (5) are guided in the bores (4) with an amount of play corresponding at least to the mean sum of the manufacturing tolerances of the bores (4), sliding blocks (6) and guide grooves (10), in that the sliding blocks (6) have an axial thickness exceeding the axial depth of the guide grooves (10) and represent, at least in the part of the circle of the screws (16), the only means of axial support between the wheel disc (1) and the friction rings (12), and in that the sliding blocks (6) have a greater friction value than the friction rings in the event of radial displacements relative to the wheel disc (1).

2. Wheel brake disc according to claim 1, characterised in that the faces (21) of the sliding blocks (6) facing the wheel disc (1) are coarser than the faces (22) facing the friction rings (12).

3. Wheel brake disc according to claim 2, characterised in that the sliding blocks (6) consist of a harder material than the wheel disc (1).

4. Wheel brake disc according to claim 1, 2 or 3, characterised in that the sleeves (5) are manufactured in one piece with the sliding blocks (6).

5. Wheel brake disc according to claims 2 to 4, characterised in that the faces (21) of the slide blocks (6) facing the wheel disc (1) have tool marks, which are smoothed off on the faces (22) on the other side.

6. Wheel brake disc according to one or more of the above claims, characterised in that the play in the sleeves (5) in the bores (4) corresponds roughly to the sum of the manufacturing tolerances of the bores (4), sliding blocks (6) and guide grooves (10).

**Revendications**

1. Disque de frein de roue pour des véhicules sur rails, comportant des anneaux de friction (12) fixés de façon mobile radialement, de part et d'autre sur un voile de roue (4) à l'aide de vis (16) orientées axialement, le voile de roue (4) étant traversé par au moins trois perçages disposés à des distances angulaires identiques entre elles et dans lesquels pénètrent des douilles (15) qui portent, à leurs extrémités qui font axialement saillie sur le voile de roue (4), des coulisseaux (16) à faces latérales dirigées sensiblement radialement par rapport au voile de roue (1) et parallèles entre elles et à l'axe (7) du voile de roue, et les deux anneaux de friction (12) étant vissés entre eux à l'aide de vis (16) traversant avec jeu les douilles (5) et leurs coulisseaux (6), en étant pressés contre le voile de roue (1), caractérisé par le fait que les douilles sont guidées dans les perçages (4) avec un jeu au moins égal à la somme moyenne des tolérances de fabrication des perçages (4), coulisseaux (6) et gorges de guidage (10), que les coulisseaux (6) possèdent une épaisseur axiale qui dépasse la profondeur axiale des gorges de guidage (10) et représentent, au moins dans la zone partielle circulaire, l'appui axial unique entre le voile de roue (1) et les anneaux de friction (12), et que les coulisseaux (6) possèdent, pour des décalages radiaux par rapport au voile de roue, un coefficient de friction plus grand que par rapport aux anneaux de friction (12).

2. Disque de frein de roue selon la revendication 1, caractérisé par le fait que les surfaces frontales (21) des coulisseaux (6) et qui sont voisines du voile de roue (1), possèdent une plus grande rugosité que celle des surfaces frontales (22) qui sont voisines des anneaux de friction (12).

3. Disque de frein de roue selon la revendication 2, caractérisé par le fait que les coulisseaux (6) sont constitués avec un matériau plus dur que le voile roue (1).

4. Disque de frein de roue selon la revendication 1, 2 ou 3, caractérisé par le fait que les douilles (5) sont fabriquées d'une pièce avec les coulisseaux (6).

5. Disque de frein selon la revendication 2 à 4, caractérisé par le fait que les surfaces frontales (21) des coulisseaux (6), qui sont voisines du voile de roue (1), possèdent des rainures réalisées par tournage, les surfaces frontales (22) situées de l'autre côté étant lissées à la meule.

6. Disque de frein de roue selon l'une ou plusieurs des revendications antérieures, caractérisé par le fait que le jeu des douilles (5) dans le perçage (4) correspond sensiblement à la somme des tolérances de fabrication des perçages (4), des coulisseaux (6) et des gorges de guidage (10).

Fig1

Fig 2